# FASCICULE DE BREVET EUROPEEN

(11) **EP 1 209 795 B1**
(45) Date de publication et mention de la délivrance du brevet: **22.09.2004**
(21) Numéro de dépôt: 01402937.5
(22) Date de dépôt: 15.11.2001
(51) Int. Cl.: H02J 13/00

(54) **Procédé d'initialisation et d'actualisation de topologie d'un poste électrique à haute ou moyenne tension**
Initialisierungs- und Aktualisierungsverfahren der Topologie einer elektrischen Hoch- oder Mittelspannungsanlage
Topology initialization and actualization method of a high or medium voltage electrical installation

(30) Priorité: 17.11.2000 FR 0014851
(43) Date de publication de la demande: 29.05.2002
(73) Titulaire: Areva T&D SA, 92309 Levallois-Perret Cedex (FR)
(72) Inventeur: Carrillo, Jean-Jacques, 82000 Montauban (FR)
(74) Mandataire: Poulin, Gérard

(56) Documents cités:
- US-A- 5 742 795
- YU D C ET AL: "FACILITATING ENGINEERING ANALYSIS VIA A GRAPHICAL DATABASE" RURAL ELECTRIC POWER CONFERENCE. NASHVILLE, APR. 30 - MAY 2, 1995, NEW YORK, IEEE, US, vol. CONF. 39, 30 avril 1995 (1995-04-30), pages C5-1-C5-7, XP000556944 ISBN: 0-7803-2044-1
- YEHSAKUL P D ET AL: "A TOPOLOGY-BASED ALGORITHM FOR TRACKING NETWORK CONNECTIVITY" IEEE TRANSACTIONS ON POWER SYSTEMS, IEEE INC. NEW YORK, US, vol. 10, no. 1, 1 février 1995 (1995-02-01), pages 339-346, XP000513251 ISSN: 0885-8950

## Description

L'invention concerne un procédé d'initialisation et d'actualisation de topologie destiné à optimiser le fonctionnement d'un système de protection numérique de jeu de barres dans un poste électrique à haute ou moyenne tension. Le système de protection est destiné en premier lieu à la détection de court-circuit dans un jeu de barres ainsi qu' à la détection de défaillance d'un composant du réseau tel qu'un sectionneur, un disjoncteur, un transformateur, ou tout autre composant parmi ceux constituant le schéma électrique global du jeu de barres. Il est en outre destiné par exemple à la validation de commandes affectant l'état des composants.
De manière générale, un système de protection numérique de jeu de barres a besoin de recevoir comme information d'entrée un schéma électrique de base correspondant à la configuration du jeu de barres dans le poste électrique géré par ce système. La reconnaissance de ce schéma de base nécessite évidemment de connaître les composants du réseau, et de disposer d'informations sur leur configuration et leur état (par exemple ouvert ou fermé). Dans les systèmesles plus classiques, cette reconnaissance est effectuée par un opérateur qui dispose d'une bibliothèque de schémas constituée d'un nombre limité, généralement moins d'un millier, de configurations électriques préétablies. Ces systèmes classiques ne permettent donc pas d'identifier tous les schémas électriques possibles ni toutes leurs particularités, car les caractéristiques du schéma électrique réel doivent nécessairement avoir été cataloguées pour être retrouvées. Par ailleurs, le travail d'un opérateur est alors fastidieux puisque c'est à lui de reconnaître si le schéma de base du réseau existe parmi les schémas catalogués dont il dispose.

Pour remédier à ces inconvénients, la présente invention propose en premier lieu d'optimiser le fonctionnement d'un système de protection numérique de jeu de barres dans un poste pour que ce système puisse effectuer une reconnaissance automatique de schéma. Le système optimisé permet de reconnaître systématiquement n'importe quel schéma électrique de base d'un poste d'un réseau électrique parmi une infinité de schémas possibles, tout en simplifiant considérablement le travail de l'opérateur. Ce dernier n'a plus besoin de rechercher la référence d'un schéma prédéfini, et saisit directement au niveau d'une interface homme machine (IHM) un premier niveau topologique constitué du schéma complet du jeu de barres avec ses composants. Le système optimisé permet ainsi de générer à partir du schéma de base les informations de topologie nécessaires que sont les accès possibles de chaque composant et les liens entre composants d'après leur état.

Il est à noter qu'il est connu du document de brevet US5742795 un procédé d'initialisation et de mise à jour de topologie de réseau, particulièrement destiné à des réseaux étendus et permettant d'effectuer l'initialisation ou la mise à jour de la topologie dans des temps acceptables. Ce procédé utilise des méthodes vectorielles et matricielles, les données de topologie de réseau mesurées étant présentées sous la forme d'une matrice adjacente de bornes qui est rendue triangulaire supérieure.

La demanderesse estime que les méthodes décrites dans ce document ne sont pas particulièrement intéressantes lorsqu'il s'agit de traiter une sous partie relativement limitée d'un réseau électrique, telle qu'un poste de transformation et/ou de distribution électrique.

Ainsi, la présente invention propose en second lieu que l'optimisation du fonctionnement d'un système de protection de jeu de barres dans un poste fasse appel à des méthodes essentiellement basées sur des algorithmes de compilation topologique et de traitement de graphes. En outre, il est prévu que l'opérateur puisse saisir dans l'IHM un deuxième niveau topologique appelé topologie d'affectation et constitué des informations d'affectation des composants à des unités de gestion de la protection détaillées plus loin. La saisie de la topologie de schéma et de la topologie d'affectation est gérée par un programme de topologie répartie qui permet de générer les fichiers de la liste des composants et de la liste des liens pour chaque unité de gestion de la protection. Au niveau de chaque unité de gestion, le programme effectue des algorithmes de compilation topologique et de traitement de graphes par recherche opérationnelle permettant de calculer les caractéristiques du schéma électrique réel, comme les noeuds de courant ou les équipotentielles.

A cet effet, l'invention a pour objet un procédé d'initialisation de l'étude et d'actualisation de la topologie d'un poste électrique à haute ou moyenne tension, destiné à optimiser le fonctionnement d'un système de protection numérique de jeu de barres dans le poste et utilisant un schéma de base de la configuration électrique du poste obtenu à partir d'informations sur la nature des composants du poste et sur les liens et accès possibles de ces composants, lesdites informations étant fournies par un opérateur à partir d'une interface homme machine et affectées à des unités de gestion dudit système de protection numérique, lesdites unités de gestion comprenant des unités périphériques de mesure réparties dans le poste et au moins une unité de centralisation, caractérisé en ce qu'il comporte les étapes suivantes:
- un procédé de compilation topologique est mis en oeuvre pour fournir une topologie compilée de schéma à partir du schéma de base et pour fournir une topologie compilée d'affectation des composants du poste et de leurs liens auxdites unités de gestion,
- un graphe partiel est réalisé pour chaque unité périphérique de mesure à partir desdites topologies compilées de schéma et d'affectation et à partir d'informations collectées par cette unité sur l'état des composants qui lui sont affectés, des procédés de recherche opérationnelle étant mis en oeuvre pour générer des graphes partiels dont la structure dépend du type d'information recherchée et de l'état de chaque composant du poste,
- un graphe complet est calculé au niveau d'une ou plusieurs unités de centralisation par des algorithmes de superposition des graphes partiels selon la théorie des graphes.

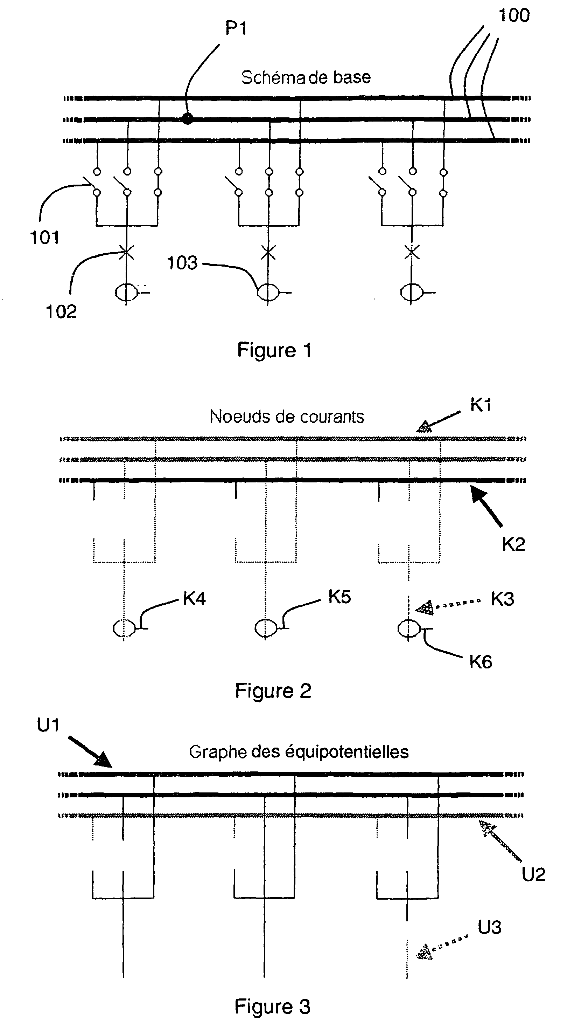

Les types d'informations recherchées pour créer les graphes caractérisant le réseau sont principalement :
- Les noeuds de courant du circuit électrique réalisé dans le poste,
- Les équipotentielles,
- Les zones reliées,
- Les disjoncteurs voisins d'un point quelconque du circuit,
- L'état du circuit vu depuis n'importe quel composant.
Ces renseignements permettent notamment de localiser immédiatement un défaut dans un jeu de barres, de détecter la défaillance d'un composant du réseau, de trouver les solutions optimales de déclenchement, d'améliorer la sensibilité d'un jeu de barres, de détecter automatiquement les défauts de zones mortes, ou encore d'autoriser ou d'inhiber certaines commandes dans des circonstances particulières (par exemple l'ouverture ou la fermeture de sectionneur).
Pour la compréhension de ce qui suit, il convient de définir précisément les types d'information énoncés précédemment. On peut se reporter aux figures 2 à 6 pour une illustration des graphes générés à partir du schéma de base d'un circuit simple représenté à la figure 1, par type d'information recherchée.
- Les noeuds de courant d'un circuit classique d'un poste sont déterminés par l'état des disjoncteurs, des sectionneurs et des transformateurs de courant équipant ce poste. On rappelle qu'un noeud est un ensemble de liens contigus, et que la fermeture d'un composant du circuit crée entre les pôles de ce composant un lien qui permet de fusionner en un seul noeud au moins deux noeuds reliés aux pôles. Dans le graphe des noeuds de courants établi à l'aide du procédé selon l'invention, l'algorithme utilisé dans le procédé de recherche opérationnelle détermine toutes les contiguïtés entre les différents liens du circuit en établissant une connexion à chaque fois qu'un disjoncteur ou un sectionneur est fermé ou dans un état inconnu. Une connexion est aussi établie dès qu'un transformateur de courant est défaillant: la mesure étant supposée fausse par défaut, il faut mesurer le courant qui traverse ce transformateur à l'aide de la somme des courants mesurés par les transformateurs voisins. A l'inverse, le circuit est ouvert au niveau d'un composant si par exemple un disjoncteur ou un sectionneur est ouvert, ou encore si un transformateur de courant fonctionne correctement car la mesure permet d'isoler le noeud. Le graphe ainsi réalisé permet d'identifier le contenu de chacun des noeuds indépendants qui définissent les noeuds de courant du circuit.
- Les équipotentielles sont déterminées uniquement par l'état des disjoncteurs et des sectionneurs, les transformateurs de courant étant tous considérés fermés quel que soient leurs états physiques. Dans le graphe des équipotentielles généréau cours de l'actualisation de la topologie du poste, le procédé de recherche opérationnelle utilise un algorithme pour déterminer toutes les contiguïtés entre les différents liens du circuit, en établissant une connexion à chaque fois qu'un disjoncteur ou un sectionneur est fermé. Le graphe ainsi réalisé permet d'identifier le contenu de chacun de ses noeuds indépendants et donc de déterminer les équipotentielles.
- Une zone d'un poste correspond généralement à une barre ou un jeu de barres du poste. Les zones dites reliées sont en fait les équipotentielles entre zones. Le procédé de recherche opérationnelle mis en oeuvre par le système permet de déterminer les zones qui sont attachées à un même noeud d'équipotentielle.
- Les disjoncteurs dits voisins sont déterminés uniquement par l'état des disjoncteurs et des sectionneurs du circuit. Pour obtenir le graphe des disjoncteurs voisins, le procédé de recherche opérationnelle détermine toutes les contiguïtés entre les différents liens du circuit en établissant une connexion à chaque fois qu'un sectionneur est fermé ou dans un état indéterminé, ou qu'un disjoncteur fermé est défaillant. Tous les disjoncteurs qui sont fermés et en état de fonctionner sont considérés comme des circuits ouverts au même titre que les disjoncteurs ouverts. Ceci peut sembler illogique mais est justifié par le fait que le graphe ainsi réalisé permet d'identifier les disjoncteurs en état de fonctionner dans chacun de ses noeuds indépendants, et donc de déterminer les disjoncteurs voisins pour un point donné du circuit (tout point du circuit appartient à un noeud indépendant).
- L'état du circuit vu depuis n'importe quel composant consiste à considérer le composant dont il est question comme un circuit ouvert. Selon le type de recherche effectuée, on considère les circuits ouverts ou fermés d'après leur état, qu'il s'agisse de sectionneurs, de disjoncteurs, de transformateurs de courant ou de tout autre composant.

L'invention, ses caractéristiques et ses avantages sont précisés dans la description qui suit en rapport avec les figures ci dessous.
La figure 1 est une représentation du schéma de base d'un exemple de circuit électrique d'un poste comportant trois jeux de barres.
La figure 2 est une représentation du graphe des noeuds de courant du circuit défini à la figure 1.
La figure 3 est une représentation du graphe des équipotentielles du circuit défini à la figure 1.
La figure 4 est une représentation du graphe des zones reliées du circuit défini à la figure 1.
La figure 5 est une représentation du graphe des disjoncteurs voisins d'un point du circuit défini à la figure 1.
La figure 6 est une représentation du graphe du circuit défini à la figure 1, le graphe étant vu depuis un composant.
La figure 7 est une représentation du schéma de base déjà représenté à la figure 1, avec une numérotation des composants du poste..
La figure 8 est identique à la figure 7, et y ajoute une numérotation provisoire de tous les liens des objets du schéma de base.
La figure 9 représente sous forme de graphe le schéma de base avec les liens numérotés.
La figure 10 représente le graphe de la réduction en noeuds des liens des objets du schéma de base.
La figure 11 représente le graphe de l'ensemble des liaisons entre les éléments terminaux représentant les accès des objets.
La figure 12 représente schématiquement une répartition des composants du poste par unités de mesure ou de centralisation du système de protection numérique.
La figure 13 représente schématiquement une topologie de communication entre les unités du système.
La figure 14 représente schématiquement une chaîne de deux octets dans lesquels chaque bit représente l'accès d'un composant identifié lors de l'affectation.
La figure 15 représente schématiquement le graphe de "fluence" de l'unité de mesure DFU1 représentée à la figure 12.

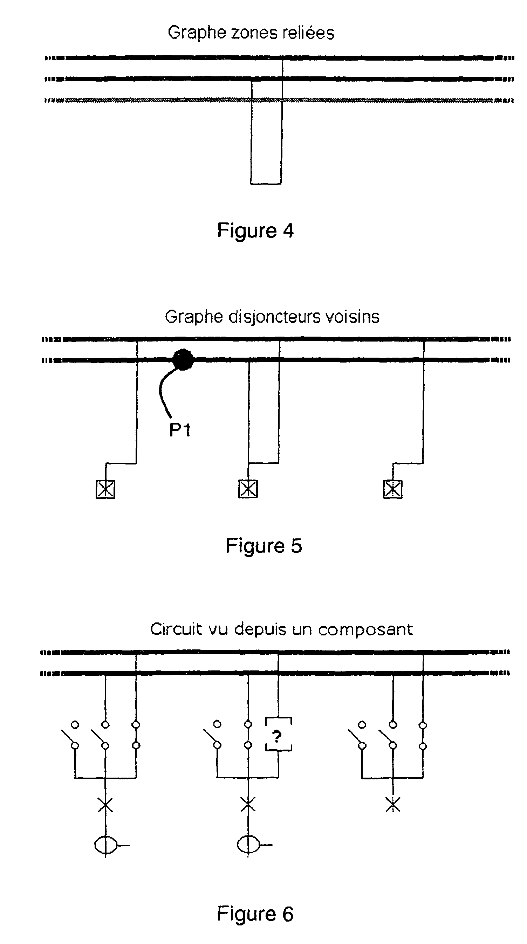

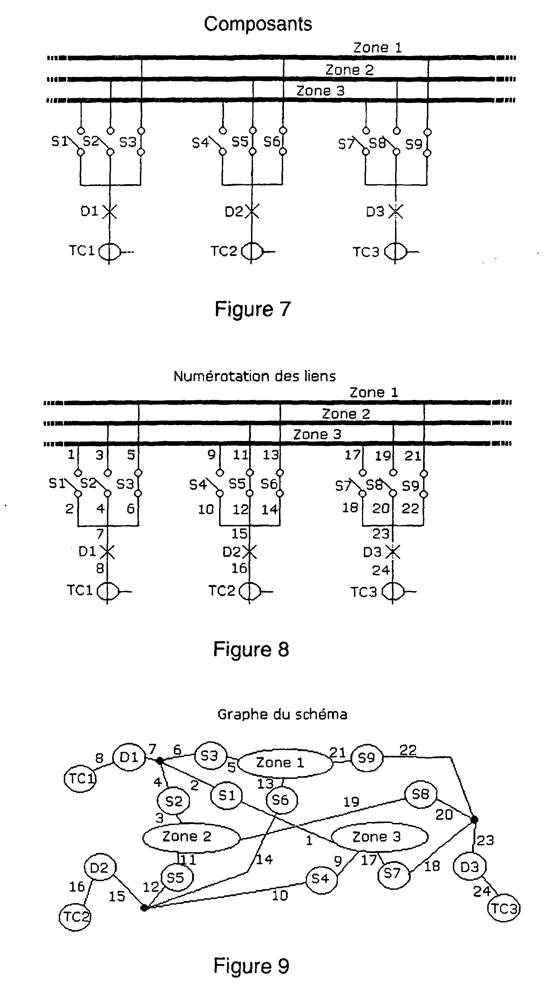

En figure 1 est représenté le schéma de base d'un exemple de circuit électrique d'un poste à trois jeux de barres 100. Autrement dit, ce circuit définit trois zones comme indiqué sur la figure 7. Le poste comprend neuf sectionneurs 101, trois disjoncteurs 102 et trois transformateurs de courant 103. Cinq sectionneurs et un disjoncteur sont ouverts. Le point P1 représente un point quelconque du circuit, et sert de référence pour le graphe des disjoncteurs voisins en figure 6.

En figure 2, le graphe des noeuds de courant du circuit fait apparaître six noeuds K1 à K6. Les noeuds K4 à K6 sont formés par les secondaires des transformateurs de courant. Le noeud K3 est formé d'un conducteur isolé du reste du circuit par un disjoncteur ouvert. Le noeud K1 est le plus étendu car il comprend deux jeux de barres reliés entre eux.

En figure 3, le graphe des équipotentielles fait apparaître trois équipotentielles U1, U2 et U3, qui correspondent aux noeuds K1 à K3 de la figure 2. On rappelle que seuls l'état des disjoncteurs et sectionneurs est pris en compte pour la détermination des équipotentielles.

En figure 4, le graphe des zones reliées fait apparaître les équipotentielles entre zones de jeux de barres.

En figure 5, le graphe fait apparaître tous les disjoncteurs connectés à un point P1 du circuit.

En figure 6, le graphe fait apparaître l'ensemble du circuit connecté à un composant.

En figure 7, tous les composants du circuit sont relevés et numérotés. On obtient ainsi la liste de composants suivante:
{ zone 1, zone 2, zone 3, S1, S2, S3, S4, S5, S6, S7, S8, S9, D1, D2, D3, TC1, TC2, TC3 }. Chaque zone représente un jeu de barres. Les sectionneurs sont nommés S_{i=1...9}, les disjoncteurs D_{i=1...3} et les transformateurs de courant TC_{i=1...3}. On remarque que tous ces objets ont deux accès, sauf les zones qui ont un nombre d'accès variable. L'état des composants n'a aucune importance à ce niveau d'analyse. Qu'un sectionneur soit ouvert ou fermé n'apporte pas d'information supplémentaire. Dans la partie interface opérateur (IHM) du système, le schéma représente les composants de façon standard, c'est à dire sans tenir compte de leur état. Dans ce qui suit, les composants du circuit sont appelés objets du schéma de base.

En figure 8, tous les liens entre les objets du schéma de base sont numérotés provisoirement. On obtient ainsi 24 liens provisoires.

En figure 9, le schéma de base est représenté sous forme de graphe avec les liens numérotés.

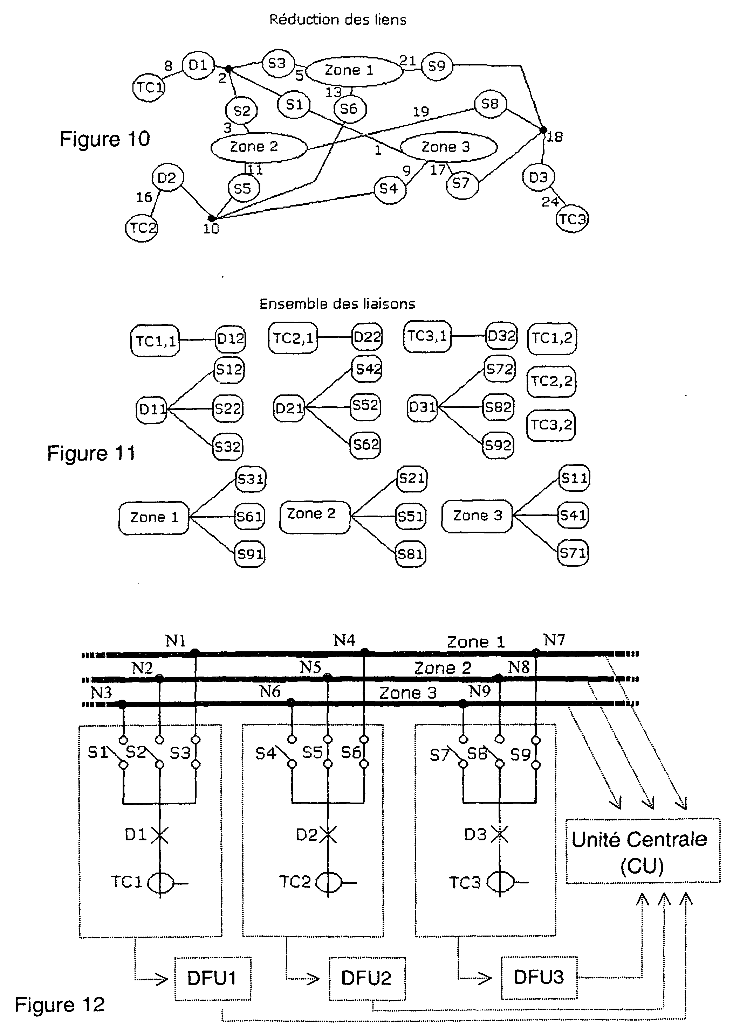

En figure 10, la réduction des liens en noeuds consiste à numéroter tous les liens contigus avec le même numéro. La convention adoptée dans cet exemple consiste à donner à chaque noeud la valeur du plus petit numéro de lien.

En figure 11, les accès des objets sont identifiés et représentés par des éléments terminaux pour former un graphe de liaisons réduit, chaque liaison représentant une connexion entre deux accès. Hormis les zones, chaque objet possède deux accès et est donc divisé en deux éléments terminaux. Les noeuds numérotés dans le graphe de la figure 10 n'ont plus d'intérêt pour la suite du procédé, car ils n'ont qu'un rôle fédérateur pour les liens. Il n'est donc plus nécessaire de conserver la numérotation des noeuds dans le graphe de liaisons réduit. A ce stade du procédé, il est possible de décrire le schéma de base par des sous-ensembles d'éléments terminaux reliés entre eux, chaque sous-ensemble étant représenté par une parenthèse contenant les éléments reliés par des liaisons du graphe.
On obtient ainsi pour le graphe la topologie suivante :
(TC11,D12) (TC21,D22) (TC31,D32) (TC12) (TC22) (TC32)
(D11,S12,S22,S32) (D21,S42,S52,S62) (D31,S72,S82,S92)
(Zone 1,S31,S61,S91) (Zone 2,S21,S51,S81) (Zone 3,S11,S41,S71)
L'ensemble décrit représente bien toutes les liaisons entre éléments terminaux. Il est à noter que par définition, chacun de ces sous-ensemble représente un noeud du schéma de base, puisque toutes les liaisons entre éléments d'un même sous-ensemble sont contiguës.

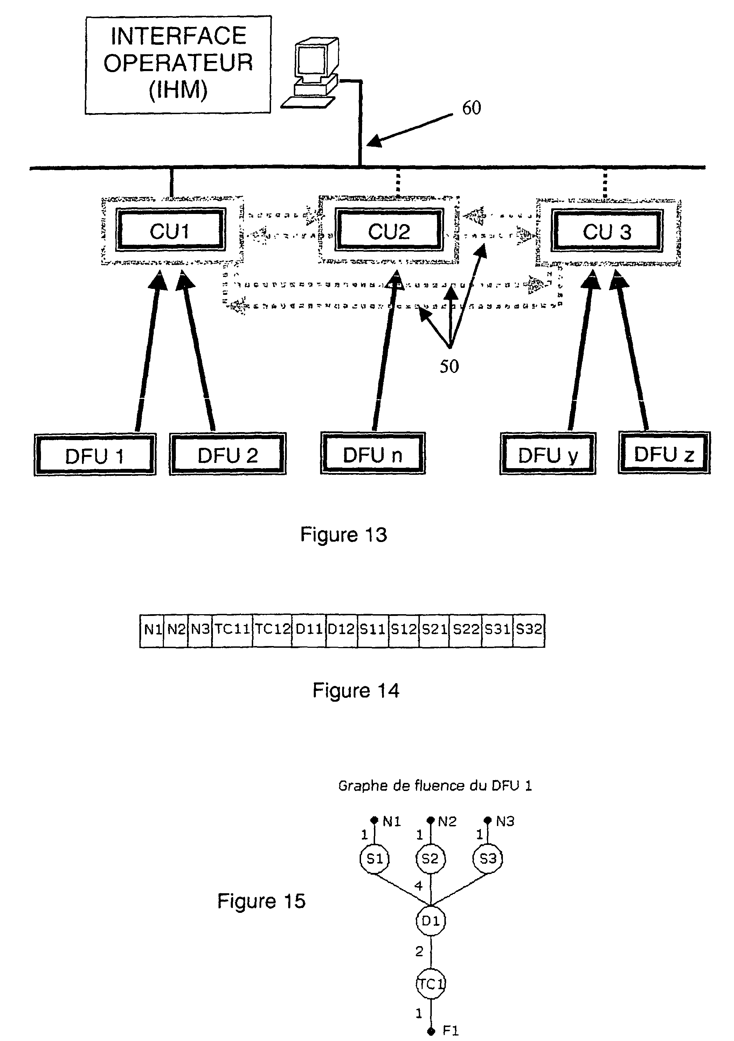

La figure 12 représente schématiquement un exemple de répartition des composants du poste par unités de gestion de la protection consistant en des unités périphériques de mesure, désignées par le sigleDFU pour "Distant Feeder Unit", et en des unités de centralisation désignées par le sigle CU pour "Central Unit". L'architecture de ces unités est détaillée à la figure 13. Il revient à un opérateur d'affecter chaque groupe de composants à une unité de gestion du système de protection, ce qui ne pose pas de problème particulier étant donné qu'une unité périphérique de mesure est généralement installée à proximité de chaque groupe distinct. Par défaut, les zones sont affectées à une ou plusieurs unités de centralisation (CU) qui ont un rôle fédérateur. Supposons que nous ayons trois unités de mesure DFU1, DFU2, et DFU3; il est logique d'affecter les composants S1,S2,S3,D1 et TC1 à l'unité DFU1, de même S4,S5,S6,D2 et TC2 à l'unité DFU2, et enfin S7,S8,S9,D3 et TC3 à l'unité DFU3. Tous les composants, et donc tous les éléments terminaux, sont ainsi affectés. Les tâches de chaque unité de mesure peuvent alors être réparties.
Chaque unité DFU peut traiter tous les éléments terminaux la concernant, c'est à dire toutes les liaisons concernant les composants qui lui sont affectés. Ces liaisons sont :
- Pour la DFU1 : (TC11,D12) (TC12) (D11,S12,S22,S32)
   (Zone 1,S31,S61,S91) (Zone 2 ,S21,S51,S81) (Zone 3,S11,S41,S71)
- Pour la DFU2: (TC21,D22) (TC22) (D21,S42,S52,S62)
   (Zone 1,S31,S61,S91) (Zone 2 ,S21,S51,S81) (Zone 3,S11,S41,S71)
- Pour la DFU3 : (TC31,D32) (TC32) (D31,S72,S82,S92)
   (Zone 1,S31,S61,S91) (Zone 2,S21,S51,S81) (Zone 3,S11,S41,S71)
- Pour la CU :
   (Zone 1,S31,S61,S91) (Zone 2,S21,S51,S81) (Zone 3,S11,S41,S71)
Chaque unité DFU étant autonome, elle ne peut traiter un élément terminal si celui-ci représente l'accès d'un composant qui n'a pas été affecté à cette unité. Une DFU identifie donc un noeud comme externe chaque fois que le sous-ensemble représentant ce noeud comporte un élément terminal d'un objet qui n'a pas été affecté à cette DFU. Les noeuds externes ne peuvent être traités que par une unité fédératrice, c'est à dire une unité centrale CU, qui est la seule capable d'en faire la synthèse. Inversement, si un sous-ensemble représentant un noeud ne comporte que des éléments terminaux d'objets qui ont tous été affecté à une même DFU, le noeud est identifié comme interne par la DFU.
Dans l'exemple traité, pour la DFU1, les noeuds internes sont donc:
(TC11.D12) (TC12) (D11,S12,S22,S32), puisque TC1, D1, S1, S2 et S3 sont tous affectés à la DFU1.
Les noeuds externes de la DFU1 sont :
(Zone 1,S31,S61,S91) (Zone 2 ,S21,S51,S81) (Zone 3,S11,S41,S71)
Il existe donc pour la DFU1 trois noeuds externes représentés sur la figure par l'ensemble des liens contigus aux noeuds locaux N1, N2 et N3 respectivement. Ces trois noeuds sont identifiés au niveau des unités CU et DFU1. La même étape d'identification des noeuds internes et externes est effectuée pour les unités DFU2 et DFU3. Sur la figure, les noeuds locaux N4, N5 et N6 représentent les trois noeuds externes de la DFU2; N7, N8 et N9 représentent les trois noeuds externes de la DFU3. Pour la DFU2, les noeuds externes sont:
(zone 1,S61,S31,S91) (zone 2,S51,S21,S81) (zone 3,S41,S11,S71).
Pour la DFU3: (zone 1,S91,S61,S31) (zone 2,S81,S51,S21) (zone 3,S71,S41,S11).
L'étape suivante revient à constituer pour chaque DFU de nouveaux noeuds externes, aussi appelés noeuds externes réduits, qui sont épurés des objets non connus de la DFU et remplacent les noeuds externes définis précédemment:
Pour la DFU1, le noeud externe représenté par N1 est épuré des éléments S61 et S91 ainsi que zone 1, qui ne sont pas affectés à la DFU1. Il ne reste que S31 affecté à la DFU1 pour ce noeud externe représenté par N1. Le même procédé est appliqué aux noeuds représentés par N2 et N3, et on obtient alors pour la DFU1 les noeuds externes réduits suivants:
(S31,N1), (S21,N2) et (S11,N3). La même opération est effectuée pour tous les DFU.
En final, nous avons la topologie compilée suivante pour tous les noeuds de base, c'est à dire tous les noeuds internes et noeuds externes réduits des DFU:
Pour la DFU1 :
   Les noeuds internes sont (TC11,D12) (TC12) (D11,S12,S22,S32), et les noeuds externes réduits sont (S31,N1) (S21 ,N2) (S11,N3).
Pour la DFU2 :
   Les noeuds internes sont (TC21,D22) (TC22) (D21,S42,S52,S62), et les noeuds externes réduits sont (S61, N4) (S51, N5) (S41, N6).
Pour la DFU3 :
   Les noeuds internes sont (TC31,D32) (TC32) (D31,S72,S82,S92), et les noeuds externes réduits sont (S91, N7) (S81, N8) (S71, N9).
Les noeuds suivants sont affectés à l'unité de centralisation (CU), à partir des noeuds externes des DFU épurés des éléments affectés à ces DFU :
(Zone 1,N1,N4,N7) (Zone 2,N2,N5,N8) (Zone 3,N3,N6,N9).
La topologie compilée d'affectation est alors complète.
Ainsi, une DFU n'a pas besoin de connaître d'objets en dehors de ceux qui lui sont affectés. Les unités périphériques DFU n'ont donc pas besoin d'échanger des données de liaisons entre elles, ces données étant gérées au niveau des noeuds affectés à l'unité centrale CU.

La figure 13 représente schématiquement une généralisation de la topologie de communication telle que mentionnée dans l'exemple précédent entre les unités de mesure et de centralisation du système. Plusieurs unités de centralisation (CU1, CU2, CU3) sont représentées, et consistent en des unités de traitement numérique comprenant des modules de compilation topologique et des modules d'algorithmes de recherche opérationnelle. Ces unités de centralisation sont reliées entre elles par un réseau de communication spécifique 50, indépendant du reste du système et notamment du réseau de communication 60 qui est quant à lui connecté à au moins une unité de centralisation (CU) et à un ordinateur assurant la fonction d'interface opérateur (IHM). Cette interface opérateur permet de transmettre aux unités de gestion de la protection (DFU,CU) les informations rentrées par l'opérateur, et permet également de récupérer à partir de ces unités (DFU,CU) les informations du jeu de barres pour les afficher sur un synoptique. Les unités périphériques de mesure (DFU) sont connectées aux unités de centralisation indépendamment les unes des autres.

Une fois la topologie d'affectation complètement réalisée, les unités de mesure et de centralisation se répartissent les tâches pour effectuer un procédé de recherche opérationnelle destiné à exploiter la topologie compilée de schéma et d'affectation pour générer des graphes dont la structure dépend de la fonction définie par le type d'information (noeuds de courant, équipotentielles ou autre) recherchée et de l'état (ouvert, fermé, indéterminé ou autre) de chaque composant du réseau. Pour cette recherche opérationnelle, chaque unité de mesure (DFU) a pour tâche de calculer son propre graphe partiel pour la fonction recherchée, à partir notamment des informations collectées par l'unité sur l'état des composants qui lui sont affectés. Ensuite, chaque unité de centralisation (CU) a pour tâche de calculer le graphe résultant des graphes partiels fournis par chaque DFU que cette CU gère. Enfin, les CU coopèrent entre elles pour calculer le graphe complet pour la fonction recherchée sur l'ensemble du schéma de base.

Chaque DFU reçoit les informations d'état des composants qu'elle gère, ce qui permet d'affecter à cette DFU de nouveaux noeuds en complément des noeuds internes et des noeuds externes réduits résultant de la topologie de schéma et d'affectation obtenue par le procédé de compilation topologique. Cette étape de la recherche opérationnelle est illustrée par l'exemple suivant où la fonction équipotentielle est recherchée:
Pour la recherche des équipotentielles, il faut considérer les règles d'état suivantes pour les composants du circuit :
- Un transformateur de courant crée une liaison équipotentielle entre ses deux accès quel que soit son état, et ferme donc toujours un graphe d'équipotentielles. Une DFU crée alors les noeuds (TCx1,TCx2) dès lors qu'un transformateur de courant TCx lui est affecté.
- Un sectionneur ou un disjoncteur ferme un graphe d'équipotentielles s'il est fermé, et l'ouvre s'il est ouvert ou dans un état inconnu. Un nouveau noeud (Sx1,Sx2) ou (Dx1,Dx2) est donc créé par une DFU dès lors que les accès d'un même objet sectionneur Sx ou disjoncteur Dx affecté à cette DFU sont reliés entre eux.
En reprenant l'exemple de compilation topologique d'affectation illustré par le schéma de la figure 12, les nouveaux noeuds suivant peuvent être créés d'après ce qui précède:
(TC11,TC12) (TC21,TC22) (TC31,TC32) (S31,S32) (S51,S52) (S61,S62) (S91,S92) (D11,D12) (D21,D22). Ces nouveaux noeuds sont aussi appelés liaisons d'état en ce sens qu'ils représentent la liaison entre les accès d'un objet en fonction de l'état du composant que représente cet objet.
La topologie compilée de schéma et d'affectation obtenue précédemment a permis de connaître les noeuds internes et externes de chaque DFU, qui peuvent à présent être complétés par les liaisons d'état. Pour la DFU1, on a vu que les noeuds internes sont (TC11,D12) (TC12) (D11,S12,S22,S32), et que les noeuds externes sont (S31,N1) (S21,N2) (S11,N3). On sélectionne alors parmi les liaisons d'état celles qui correspondant à des objets affecté à la DFU1, soit (TC11,TC12) (S31,S32) (D11,D12), pour obtenir le graphe partiel de l'ensemble des noeuds gérés par la DFU1.
De même, on obtient pour la DFU2 le graphe partiel de l'ensemble des noeuds suivants:
(TC21,D22) (TC22) (D21,S42,S52,S62)
(S61, N4) (S51, N5) (S41, N6)
(TC21,TC22) (S51,S52) (S61,S62) (D21,D22)
Pour la DFU3, on obtient:
(TC31,D32) (TC32) (D31,S72,S82,S92)
(S91, N7) (S81, N8) (S71, N9)
(TC31,TC32) (S91,S92).
Pour la CU, on a vu que cette unité centrale ne gère que les noeuds externes et les zones pendant le procédé topologique d'affectation. On reprend donc les noeuds précédents:
(Zone 1,N1,N4,N7) (Zone 2,N2,N5,N8) (Zone 3,N3,N6,N9).
Chaque unité périphérique DFU peut à présent effectuer une étape de réduction de noeuds au niveau du graphe partiel qu'elle gère, par comparaison mutuelle des noeuds entre eux. Chaque noeud d'un graphe partiel est ainsi comparé aux autres noeuds de ce graphe un à un, afin de déterminer si deux noeuds comportent un élément terminal commun. Dans l'affirmative, cela signifie que les deux noeuds sont directement reliés entre eux, et peuvent donc être réduits en un seul noeud en mettant en commun leurs éléments terminaux. Le noeud réduit obtenu est comparé aux autres noeuds du graphe, ce qui peut à nouveau aboutir à la réduction de deux noeuds en un seul, et ainsi de suite. On peut remarquer que la réduction de noeuds peut se modéliser mathématiquement par une succession de ET logique entre les sous ensembles représentant les noeuds, et par une opération de OU logique entre les sous ensembles pour lesquels le ET logique a donné un résultat non nul. Au niveau du graphe partiel, cette étape consiste finalement à regrouper plusieurs noeuds locaux reliés entre eux pour former un noeud plus large.
Pour la DFU1 par exemple, (TC11,D12) ET (TC11,TC12) = (TC11,D12,TC12), qui peut être regroupé avec (TC12) et (D11,D12) pour donner (TC11,D12,TC12,D11). On voit aussi que (D11,S12,S22,S32) ET (S31,S32) ET (S31,N1) donnent (D11,S12,S22,S32,S31,N1) qui possède l'élément D11 en commun avec le noeud intermédiaire précédent, ce qui permet de créer le noeud plus large (TC11,D12,TC12,D11,S12,S22,S32,S31,N1). Les noeuds (S21,N2) et (S11,N3) ne peuvent pas quant à eux être regroupés avec un autre noeud.
La réduction donne donc pour la DFU1 le graphe partiel réduit suivant:
(TC11,D12,TC12,D11,S12,S22,S32,S31,N1) (S21 ,N2) (S11,N3).
De même, on obtient pour la DFU2:
(TC21,D22,TC22,D21,S42, S51,S52,S62,S61, N4,N5) (S41, N6),
et pour la DFU3:
(TC31,D32,TC32) (D31,S72,S82,S92,S91, N7) (S81, N8) (S71, N9).
Ces informations sont transmises par les DFU à l'unité de centralisation CU qui gère ces DFU. On suppose ici qu'il y a une même CU pour les trois DFU, mais le principe de fonctionnement est le même si plusieurs CU gèrent les DFU car dans ce cas les CU communiquent entre eux par un réseau de communication tel que représenté à la figure 13.
La CU peut ainsi traiter l'ensemble des noeuds du graphe complet suivant:
(Zone 1,N1,N4,N7) (Zone 2,N2,N5,N8) (Zone 3,N3,N6,N9)
(TC11,D12,TC12,D11,S12,S22,S32,S31,N1) (S21 ,N2) (S11,N3)
(TC21,D22,TC22,D21,S42, S51,S52,S62,S61, N4,N5) (S41, N6)
(TC31,D32,TC32) (D31,S72,S82,S92,S91, N7) (S81, N8) (S71, N9).
L'ensemble des noeuds peut être réduit en utilisant la même méthode de regroupement que pour les noeuds des graphes partiels. On trouve alors :
(Zone1,Zone2,N1,N4,N7,N2,N5,N8,TC11,TC12,D11,D12,S12,S21,S22,S31,S32,S72,S8 1,S82,S91,S92,TC21,TC22,D21,D22,S42,S51,S52,S61,S62,D31)
(Zone3,N3,N6,N9,S11,S71,S41)
(TC31,D32,TC32)
Les représentations N1à N9 des noeuds externes ne sont plus utiles à ce stade pour représenter le graphe complet des trois équipotentielles correspondant aux trois noeuds réduits obtenus. Ces noeuds N1 à N9 peuvent donc être supprimés pour simplifier les sous ensembles d'éléments formant les trois équipotentielles distinctes. On peut vérifier que le graphe complet obtenu correspond bien à l'illustration de la figure 3 pour le même exemple où sont dessinées les trois équipotentielles U1, U2 et U3.
Le graphe des équipotentielles permet notamment de s'assurer qu'un sectionneur peut être fermé en charge, dès lors que les éléments terminaux représentant les deux accès de ce sectionneur appartiennent à un même noeud d'équipotentielle.
Par exemple, on pourra fermer S8 ou S2, mais pas S1 ni S7 ni S4.
Pour savoir si on peut ouvrir un sectionneur, on applique le même type de recherche opérationnelle, mais on considère comme ouvert le sectionneur que l'on veut ouvrir puisque il faut savoir si les deux accès du sectionneur une fois ouvert seront au même potentiel. Dans l'exemple traité, on peut ouvrir S3,S5,S6 et S9.
Les équipotentielles nous donnent également les informations de groupes de zones. Dans l'exemple traité, on trouve les deux groupes (Zone1,Zone2) et (Zone3).

Afin d'améliorer très nettement la rapidité du procédé de recherche opérationnelle utilisé pour la mise en oeuvre de l'invention, la topologie d'affectation est suivie d'un traitement de pré-formatage des informations d'affectation saisies en fichiers binaires de topologie, au niveau de chaque DFU. Ces fichiers utilisent des chaînes d'un ou plusieurs octets. Chaque bit d'un octet représente l'accès d'un composant identifié lors de l'affectation, ou peut aussi représenter un noeud externe (tel que les noeuds N1 à N9 dans l'exemple traité précédemment) affecté à une unité de mesure du système.

La figure 14 représente un tel fichier pré-formaté sur treize bits (ce fichier requiert donc deux octets), dont les bits représentent tous les éléments terminaux affectés à la DFU1 et tous les noeuds externes de la DFU1. Ainsi, tous les noeuds de base (noeuds internes et noeuds externes réduits) du graphe partiel géré par la DFU 1 peuvent être décrits par les fichiers binaires suivants, en faisant passer chaque bit au niveau logique 1 si l'accès que ce bit représente constitue un accès du noeud:
- (TC11,D12): = 0001001000000
- (TC12): = 0000100000000
- (D11,S12,S22,S32): = 0000010010101
- (S31,N1): = 1000000000010
- (S21 ,N2): = 0100000001000
- (S11,N3): = 0010000100000
Pour savoir si deux noeuds sont directement reliés entre eux, l'algorithme de recherche opérationnelle réalise simplement le ET logique entre les fichiers pour rechercher une éventuelle coïncidence binaire. Si le résultat est nul, il n'y a pas de lien. Dans le cas contraire, il y a un ou plusieurs liens (autant que de positions binaires communes à 1), et un regroupement des noeuds peut alors être réalisé en effectuant le OU logique entre ces noeuds.
On remarque que chacun des noeuds de base du graphe partiel est indépendant des autres, c'est à dire qu'il n'existe pas de 1 logique commun à la même position entre les fichiers décrivant tous les noeuds du graphe. Cette constatation est parfaitement normale, puisque ces noeuds de base ont déjà été regroupés, c'est à dire réduits au maximum, lors du procédé de compilation topologique.
L'algorithme de recherche opérationnelle requiert ensuite la description en fichiers binaires des liaisons d'état, qui est la suivante pour la DFU1:
- (TC11,TC12): = 0001100000000
- (S31,S32): = 0000000000011
- (D11,D12): = 0000011000000
La réduction de l'ensemble des noeuds du graphe partiel peut alors être effectuée en cherchant à partir de chaque liaison d'état les regroupements possibles avec les noeuds de base du graphe. La première liaison d'état (TC11,TC12) donne un résultat non nul sur une opération ET logique avec les noeuds de base (TC 11,D12) et (TC12) du graphe, et donne un résultat nul avec les autres noeuds de base.
En effet :
- (TC11,D12): = 000**1**001000000
- et (TC11,TC12): = 000**1**100000000
- De même, (TC12): = 0000**1**00000000
- et (TC11,TC12): = 0001**1**00000000
Le procédé de recherche regroupe ensuite les noeuds précédents par une opération de OU logique:
(TC11,D12) OU (TC11,TC12) = (TC11,TC12,D12) = 0001101000000,
et (TC12) OU (TC11,TC12) = (TC11,TC12) = 0001100000000.
Les deux noeuds obtenus peuvent aussi être regroupés puisqu'ils en commun les accès de la liaison d'état sur laquelle s'est effectuée la recherche. Le procédé ne garde finalement que le noeud global (TC11,TC12,D12) pour la première liaison d'état. Une nouvelle recherche est effectuée pour chaque liaison d'état restante, et tous les noeuds globaux obtenus sont ensuite regroupés entre eux pour obtenir le noeud irréductible (TC11,D12,TC12,D11,S12,S22,S32,S31,N1) du graphe partiel de la DFU1. Par ailleurs, le procédé de recherche opérationnelle a pu établir que toutes les liaisons d'état donnent un résultat nul sur une opération ET logique avec les noeuds de base (S21 ,N2) et (S11,N3) qui sont donc des noeuds irréductibles du graphe partiel de la DFU1. On retrouve ainsi le graphe partiel réduit de la DFU1:
(TC11,D12,TC12,D11,S12,S22,S32,S31,N1) (S21 ,N2)(S11,N3).

Afin d'améliorer la rapidité de l'algorithme de recherche opérationnelle, on peut considérer qu'il n'est pas indispensable d'effectuer une opération de. ET logique entre chaque liaison d'état et tous les noeuds de base d'un graphe partiel pour une DFU. On peut en effet utiliser pour chaque DFU un graphe dit graphe de fluence de cette DFU, établi à partir du schéma de base des composants tel que rentré dans l'interface opérateur, c'est à dire sans tenir compte de l'état des objets.

En figure 15 est représenté le graphe de fluence de la DFU1. On remarque par exemple que le transformateur de courant TC1 ne peut relier que le noeud F1 ainsi que le disjoncteur D1 (par son accès D12). Il est donc inutile de chercher l'influence de la liaison d'état (TC11,TC12) sur d'autres noeuds de base que ceux du graphe partiel de la DFU1 qui contiennent l'accès D12 ou le noeud F1. Grâce aux informations du graphe de fluence, les opérations peuvent finalement être réalisées dans un ordre optimum prédéfini, pour limiter les redondances et pour permettre que chaque résultat intermédiaire aboutisse soit à isoler un noeud de base soit à grouper des noeuds par l'intermédiaire d'une liaison d'état.

Pour définir cet ordre optimum, l'algorithme de recherche opérationnelle utilise la valeur de fluence de chaque lien entre les objets, valeur entière qui représente le nombre d'accès du lien à une liaison d'état. Sur l'exemple de la figure 15, un lien entre un noeud (N1, N2 ou N3) et un sectionneur ne possède qu'un seul accès à une liaison d'état, en l'occurrence une liaison (Sx1,Sx2). La valeur de fluence de chacun des trois liens est donc égale à un, tel que représenté. Il est à noter qu'un noeud (N1, N2, N3 ou F1) ne représente aucune liaison d'état car il est systématiquement connecté à une zone du graphe complet ou à une zone externe au graphe. Un lien entre un sectionneur (S1,S2,S3) et le disjoncteur (D1) possède quatre accès à une liaison d'état, car il est relié à ces quatre objets (S1,S2,S3,D1) qui peuvent chacun créer une liaison en fonction de leur état. Par exemple, un sectionneur Sx autorise une liaison d'état Sx1 ou Sx2 car il peut être ouvert ou fermé. Le même raisonnement est appliqué pour les autres liens du graphe de fluence, pour obtenir les valeurs indiquées sur la figure.

Ensuite, le nombre maximum d'opérations à réaliser est calculé en diminuant de un chaque valeur de fluence et en effectuant la somme des valeurs obtenues. Les valeurs de fluence permettent ainsi à l'algorithme de recherche opérationnelle de définir le nombre de comparaisons et regroupements de noeuds à réaliser.

## Revendications

1. Procédé d'initialisation de l'étude et d'actualisation de la topologie d'un poste électrique à haute ou moyenne tension, destiné à optimiser le fonctionnement d'un système de protection numérique de jeu de barres dans le poste et utilisant un schéma de base de la configuration électrique du poste obtenu à partir d'informations sur la nature des composants du poste et sur les liens et accès possibles de ces composants, lesdites informations étant fournies par un opérateur à partir d'une interface homme machine (IHM) et affectées à des unités de gestion (DFU, CU) dudit système de protection numérique, lesdites unités de gestion comprenant des unités périphériques de mesure (DFU) réparties dans le poste et au moins une unité de centralisation (CU), **caractérisé en ce qu'**il comporte les étapes suivantes:
- un procédé de compilation topologique est mis en oeuvre pour fournir une topologie compilée de schéma à partir du schéma de base et pour fournir une topologie compilée d'affectation des composants du poste et de leurs liens auxdites unités de gestion (CU, DFU),
- un graphe partiel est réalisé pour chaque unité périphérique de mesure (DFU) à partir desdites topologies compilées de schéma et d'affectation et à partir d'informations collectées par cette unité sur l'état des composants qui lui sont affectés, des procédés de recherche opérationnelle étant mis en oeuvre pour générer des graphes partiels dont la structure dépend du type d'information recherchée et de l'état de chaque composant du poste,
- un graphe complet est calculé au niveau d'une ou plusieurs unités de centralisation (CU) par des algorithmes de superposition des graphes partiels selon la théorie des graphes.

2. Procédé d'initialisation de l'étude et d'actualisation de la topologie d'un poste électrique à haute ou moyenne tension selon la revendication 1, **caractérisé en ce que** le procédé de compilation inclut les étapes suivantes :
- numérotation provisoire de tous les liens du schéma de base,
- réduction en noeuds des liens entre les objets numériques représentant les composants du réseau, par la renumérotation avec un même numéro de tous les liens contigus entre objets,
- morcellement de chaque objet en autant d'éléments terminaux que d'accès possibles pour le composant qu'il représente,
- constitution de toutes les liaisons entre objets par l'établissement de la liste de tous leurs éléments terminaux sous la forme d'un graphe de liaisons réduit,
- division de la liste des éléments terminaux en sous-ensembles constitués chacun d'éléments terminaux reliés entre eux,
- affectation de chaque sous-ensemble d'éléments terminaux à une unité de gestion (CU, DFU) dès lors qu'au moins un élément terminal dudit sous-ensemble représente une liaison concernant un composant géré par cette unité,
- identification des sous-ensembles d'éléments terminaux affectés à chaque unité périphérique de mesure (DFU) comme noeuds internes ou noeuds externes de cette unité, un sous-ensemble étant identifié comme noeud interne si tous ses éléments terminaux sont gérés par l'unité et comme noeud externe si au moins un élément terminal concerne un composant qui n'a pas été affecté à l'unité,
- pour chaque unité périphérique de mesure (DFU), constitution de noeuds externes réduits qui sont purgés des objets non connus de l'unité et remplacent les anciens noeuds externes identifiés à l'étape précédente,
- identification des noeuds traités par une unité de centralisation (CU) du système de protection.

3. Procédé d'initialisation de l'étude et d'actualisation de la topologie d'un poste électrique à haute ou moyenne tension selon la revendication 1, **caractérisé en ce que** les procédés de recherche opérationnelle utilisent les informations collectées par une unité périphérique de mesure (DFU) sur l'état des composants qui lui sont affectés pour parvenir à une topologie sous forme de noeud(s) ou de graphe ouvert entre les accès de chaque objet, et **en ce que** plusieurs noeuds reliés entre eux dans un graphe partiel sont regroupés en un seul noeud lors d'une étape de réduction de noeuds par comparaison mutuelle.

4. Procédé selon la revendication 3, **caractérisé en ce que** les informations d'affectation propres aux unités périphériques de mesure (DFU) sont formatées en fichiers binaires de topologie qui utilisent des chaînes d'un ou plusieurs octets, et **en ce que** chaque bit d'un octet représente l'accès d'un composant qui est identifié lors de l'affectation ou représente un noeud externe affecté à une desdites unités périphériques.

5. Procédé selon la revendication 4, **caractérisé en ce qu'**un noeud d'un graphe partiel est décrit par un fichier binaire dont chaque bit passe au niveau logique 1 si l'accès que ce bit représente constitue un accès du noeud.

6. Procédé selon la revendication 5, **caractérisé en ce que** la réduction des noeuds d'un graphe partiel est réalisée à partir de fichiers binaires décrivant les noeuds de base et les liaisons d'état du graphe, en effectuant des opérations de ET logique et de OU logique entre ces fichiers binaires.

7. Procédé selon la revendication 6, **caractérisé en ce qu'**un graphe de fluence de la partie du schéma de base affectée à une unité périphérique de mesure (DFU) est établi à partir du schéma de base réparti saisi par un opérateur, et **en ce que** ledit graphe de fluence est exploité par ladite unité afin d'optimiser le nombre d'opérations logiques qu'elle doit réaliser entre les fichiers binaires pour les étapes de réduction de noeuds.

## Patentansprüche

1. Verfahren zur Initialisierung, zur Untersuchung und zur Aktualisierung der Topologie einer elektrischen Anlage hoher oder mittlerer Spannung, das dazu vorgesehen ist, die Funktionsweise eines digitalen Strichcodesatz-Schutzsystems in der Anlage zu optimieren, und das ein Basisschema der elektrischen Konfiguration der Anlage verwendet, das anhand von Informationen über die Natur der Bestandteile der Anlage und über die Verbindungen und möglichen Zugänge zu diesen Bestandteilen erhalten wird, wobei die Informationen von einer Bedienungsperson über eine Mensch-Maschine-Schnittstelle (IHM = interface homme machine) geliefert werden und sich auf Verwaltungseinheiten bzw. Steuereinheiten (DFU, CU) des digitalen Schutzsystems beziehen, wobei die Steuereinheiten periphere Messeinheiten (DFU) umfassen, welche an der Anlage verteilt sind, sowie mindestens eine Zentralisierungseinheit (CU), **dadurch gekennzeichnet, dass** es die folgenden Schritte umfasst:
- ein topologisches Kompilierungsverfahren wird eingesetzt, um eine kompilierte Schema-Topologie anhand des Basisschemas zu liefern, und um eine kompilierte Topologie der Zuordnung der Komponenten der Anlage und ihrer Verbindungen mit den Steuereinheiten (CU, DFU) zu liefern,
- eine partielle graphische Darstellung wird für jede periphere Messeinheit (DFU) anhand der kompilierten Topologien des Schemas und der Zuordnung und anhand von durch diese Einheit gesammelten Informationen über den Zustand der ihr zugeordneten Komponenten erstellt, wobei Operations Research-Verfahren eingesetzt werden, um partielle graphische Darstellungen zu erzeugen, deren Struktur von dem gesuchten Informationstyp und vom Zustand jeder Komponente der Anlage abhängt,
- eine vollständige graphische Darstellung wird auf der Ebene einer oder mehrerer Zentralisierungseinheiten (CU) durch Überlagerungsalgorithmen der partiellen Graphen gemäß der Graphentheorie berechnet.

2. Verfahren zur Initialisierung, zur Untersuchung und zur Aktualisierung der Topologie einer elektrischen Anlage mit hoher oder mittlerer Spannung nach Anspruch 1, **dadurch gekennzeichnet, dass** das Kompilierungsverfahren die folgenden Schritte umfasst:
- vorläufige Nummerierung aller Verbindungen des Basisschemas,
- Reduzierung auf Knoten der Verbindungen zwischen die Komponenten des Netzes darstellenden digitalen Objekten durch die Durchnummerierung mit ein und derselben Nummer aller aneinandergrenzenden Verbindungen zwischen Objekten,
- Stückelung jedes Objekts in so viele Endelemente wie es mögliche Zugänge für die Komponente gibt, die es darstellt,
- Herstellung aller Verbindungen zwischen Objekten durch Aufstellung der Liste all ihrer Endelemente in Form eines reduzierten Verbindungsgraphen,
- Unterteilung der Liste der Endelemente in Untereinheiten, die jeweils aus untereinander verbundenen Endelementen bestehen,
- Zuordnung jeder Untereinheit von Endelementen zu einer Steuereinheit (CU, DFU), sobald mindestens ein Endelement der Untereinheit eine Verbindung darstellt, die eine von dieser Einheit gesteuerte Komponente betrifft,
- Identifizierung der Untereinheiten von Endelementen, die jeder peripheren Messeinheit (DFU) als interne oder externe Knoten dieser Einheit zugeordnet sind, wobei eine Untereinheit als interner Knoten identifiziert wird, wenn alle seine Endelemente von der Einheit gesteuert werden, und als externer Knoten, wenn mindestens ein Endelement eine Komponente betrifft, die nicht der Einheit zugeordnet wurde,
- für jede periphere Messeinheit (DFU), Bildung von reduzierten externen Knoten, die von nicht bekannten Objekten der Einheit bereinigt sind bzw. werden und die alten, in dem vorhergehenden Schritt identifizierten externen Knoten ersetzen,
- Identifizierung der von einer Zentralisierungseinheit (CU) des Schutzsystems bearbeiteten Knoten.

3. Verfahren zur Initialisierung, zur Untersuchung und zur Aktualisierung der Topologie einer elektrischen Anlage hoher oder mittlerer Spannung nach Anspruch 1, **dadurch gekennzeichnet, dass** die Operations Research-Verfahren die ' von einer peripheren Messeinheit (DFU) gesammelten Informationen über den Zustand der Komponenten, die ihr zugeordnet sind, benutzt, um zu einer Topologie in Form von (einem) Knoten oder eines zwischen den Zugängen zu jedem Objekt offenen Graphen zu gelangen, und dass mehrere untereinander in einem partiellen Graphen verbundene Knoten bei einem Reduktionsschritt der Knoten durch gegenseitigen Vergleich zu einem einzigen Knoten zusammengefasst werden.

4. Verfahren nach Anspruch 3, **dadurch gekennzeichnet, dass** die Zuordnungsinformationen, die den peripheren Messeinheiten (DFU) eigen sind, in digitalen Topologie-Dateien formatiert werden, welche Ketten aus einem oder mehreren Bytes verwenden, und dass jedes Bit eines Bytes den Zugang einer bei der Zuordnung identifizierten Komponente darstellt, oder einen einer der peripheren Einheiten zugeordneten. externen Knoten darstellt.

5. Verfahren nach Anspruch 4, **dadurch gekennzeichnet, dass** ein Knoten eines partiellen Graphen durch eine digitale Datei beschrieben wird, von der jedes Bit zu dem logischen Zustand (1) übergeht, wenn der Zugang, den dieses Bit darstellt, einen Zugang zum Knoten darstellt.

6. Verfahren nach Anspruch 5, **dadurch gekennzeichnet, dass** die Reduktion der Knoten eines partiellen Graphen anhand von digitalen Dateien erfolgt, welche Basisknoten und die Zustandsverbindungen des Graphen,beschreiben, indem logische UND-Operationen und ODER-Operationen zwischen diesen digitalen Dateien ausgeführt werden.

7. Verfahren nach Anspruch 6, **dadurch gekennzeichnet, dass** ein Ablaufdiagramm des Abschnitts des einer peripheren Messeinheit (DFU) zugeordneten Basisschemas anhand des von einer Bedienungsperson erfassten verteilten Basisschemas erstellt wird, und dass das Ablaufdiagramm von der Einheit ausgewertet wird, um die Anzahl logischer Operationen zu optimieren, die sie zwischen digitalen Dateien für die Knoten-Reduktionsschritte ausführen muss.

## Claims

1. A process for initializing the study of and for updating the topology of a high-voltage or medium-voltage electrical power station, the process being intended to optimize the operation of a digital protection system for protecting sets of busbars in the power station and using a basic schematic of the electrical configuration of the power station obtained from information on the type of components used in the power station, and on the possible connections and accesses to said components, said information being provided by an operator from a man-machine interface (MMI) and assigned to management units of said digital protection system (DFU, CU), said management units comprising peripheral measurement units (DFU) distributed over the power station and at least one centralization unit (CU), the process being **characterized in that** it includes the following steps:
- a topological compilation process is implemented to provide a compiled schematic topology from the basic schematic, and to provide a compiled assignment topology of the components in the power station and of their connections to said management units (CU, DFU);
- a partial graph is obtained for each peripheral measuring unit (DFU) from said compiled schematic and assignment topologies and from information collected by said unit on the status of the components which are assigned to it, operational search processes being implemented to generate partial graphs whose structure depends on the type of information searched for and the status of each component of the power station; and
- a complete graph is computed in one or more centralization units (CU) by algorithms which superpose partial graphs in accordance with graph theory.

2. A process for initializing the study of and for updating the topology of a high-voltage or medium-voltage electrical power station according to claim 1, **characterized in that** the compilation process includes the following steps:
- provisionally numbering all the connections of the basic schematic,
- reducing to nodes connections between numbered objects representing the components of the network, by renumbering with the same number all the contiguous connections between objects,
- splitting each object into as many terminal components as there are possible ports for the component that it represents,
- constituting all the connections between objects by establishing the list of all their terminal components in the form of a reduced connections graph,
- dividing the list of terminal components into subsets each consisting of interconnected terminal components,
- assigning each subset of terminal components to a management unit (CU, DFU) as soon as at least one terminal component of said subset represents a connection concerning a component managed by that unit,
- identifying subsets of terminal components assigned to each peripheral measuring unit (DFU) as internal nodes or external nodes of said unit, a subset being defined as an internal node if all its terminal components are managed by the unit and as external node if at least one terminal component concerns a component that has not been assigned to the unit,
- for each peripheral measuring unit (DFU), constituting reduced external nodes that are purged of objects unknown to the unit and replace the old external nodes identified in the preceding step, and
- identifying the nodes processed by a centralization unit (CU) of the protection system.

3. A process for initializing the study of and for updating the topology of a high-voltage or medium-voltage electrical power station according to claim 1, **characterized in that** the operational search processes use information collected by a peripheral measuring unit (DFU) on the status of the components which are assigned to it to arrive at a topology in the form of node(s) or in the open graph form between the ports of each object, and **in that** a plurality of nodes interconnected in a partial graph are grouped into a single node during a step of node reduction by mutual comparison.

4. A process according to claim 3, **characterized in that** the assignment information belonging to the peripheral measuring units (DFU) is formatted as topology binary files which use strings of one or more bytes, and **in that** each bit of a byte represents the port of a component which is identified at the time of the assignment or represents an external node assigned to a said peripheral unit.

5. A process according to claim 4, **characterized in that** a node of a partial graph is described by a binary file in which each bit goes to logic 1 if the port that the bit represents is a port of the node.

6. A process according to claim 5, **characterized in that** the nodes of a partial graph are reduced on the basis of binary files describing the basic nodes and the status connections of the graph by applying the AND and OR logic operators to the binary files.

7. A process according to claim 6, **characterized in that** a flow graph of the part of the basic schematic assigned to a peripheral measuring unit (DFU) is established from the distributed basic schematic entered by an operator, and **in that** said flow graph is processed by said unit to optimize the number of logic operations that it must perform on the binary files for the node reduction steps.
